# EUROPÄISCHE PATENTSCHRIFT

(11) **EP 0 635 198 B1**
(45) Veröffentlichungstag und Bekanntmachung des Hinweises auf die Patenterteilung: **02.04.1997**
(21) Anmeldenummer: 94109247.0
(22) Anmeldetag: 16.06.1994
(51) Int. Cl.: A01D 41/12

(54) **Mähdrescher**
Combine harvester
Moissonneuse-batteuse

(30) Priorität: 23.07.1993 DE 4324725
(43) Veröffentlichungstag der Anmeldung: 25.01.1995
(73) Patentinhaber: CLAAS Kommanditgesellschaft auf Aktien, 33428 Harsewinkel (DE)
(72) Erfinder: Torry, Graham C., Isleham Ely, Cambs. CB7 5RR (GB)

(56) Entgegenhaltungen:
- EP-A- 0 212 337
- EP-A- 0 230 261
- DE-A- 3 119 954
- DE-A- 3 704 755
- FR-A- 1 131 773
- FR-A- 2 075 422
- FR-A- 2 108 333
- US-A- 1 625 353

## Beschreibung

Die vorliegende Erfindung betrifft einen Mähdrescher mit einer Siebeinrichtung und mit einer Einrichtung zum Verteilen des Korn-Spreu-Gemisches über die gesamte Schnittbreite des Mähdreschers, die im wesentlichen aus zwei in festen Rotorgehäusen angeordneten in entgegengesetzten Drehrichtungen rotierend antreibbaren Verteilerscheiben besteht, wobei die Rotorgehäuse und die Verteilerscheiben auf einer Quertraverse gelagert sind.

Bei einem solchen aus der DE 37 04 755 A1 bekannten Mähdrescher ist die der Siebeinrichtung funktionell zugeordnete Einrichtung zum Verteilen des Korn-Spreu-Gemisches auf einer ortsfesten Quertraverse montiert, die sich im wesentlichen über die Breite der Ausfallhaube des Mähdreschers erstreckt. Die Rotorgehäuse und die Verteilerscheiben sind gegen die Horizontale so geneigt, daß das Korn-Spreu-Gemisch in die Rotorgehäuse hineinfällt. Funktionell bedingt stehen die Rotorgehäuse in Durchlaufrichtung des Korn-Spreu-Gemisches gesehen, hinter den Sieben der Siebeinrichtung. Die Quertraverse ist an ortsfesten Haltern befestigt. Der Antrieb der Verteilerschnecken erfolgt von einer gemeinsamen angetriebenen Welle aus über Kegelradgetriebe.

Es ist nun beim wechseln der Getreideart und besonders während des Dreschbetriebes notwendig, die Siebeinrichtung zu reinigen und zu warten. Bei dem vorbekannten Mähdrescher ist die Siebeinrichtung äußerst schlecht zugänglich, bedingt durch die Zuordnung einer Einrichtung zum Verteilen des Korn-Spreu-Geschmisches.

Aus der DE 35 29 801 C1 ist es bekannt, die Rotorgehäuse an seitlichen Trägern zu montieren, die um Horizontalachsen schwenkbar sind. Die Einrichtung zum Verteilen des Korn-Spreu-Gemisches kann dann so weit abgesenkt werden, daß sie vor die Hinterräder des Mähdreschers verlagert wird. Dadurch wird zwar der auf Höhe der Siebeinrichtung liegende Bereich frei, zugänglich wird die Siebeinrichtung dadurch aber nicht, da die Wartungsperson mit den Beinen gegen die abgesenkte Einrichtung stößt. Die Wartungsarbeiten werden dadurch nicht erleichtert. Der vorliegenden Erfindung liegt daher die Aufgabe zugrunde, einen Mähdrescher der eingangs näher bezeichneten Art in einfacher Weise so auszubilden, daß die Siebeinrichtung von der hinteren Seite aus frei zugänglich ist.
Diese Aufgabe wird dadurch gelöst, daß die Quertraverse aus zwei im Stroßbereich durch eine Koppeleinrichtung mit einander verbindbare Einzeltraversen gebildet ist, und daß jede Einzeltraverse mittels eines Schwenkbeschlages an eine außenseitige, im Stoßbereich der Einzeltraversen abgewandte Achse schwenkbar derart aufgehängt ist, daß jede Einzeltraverse in eine horizontale Betriebsstellung und eine vertikale oder annähernd vertikale Wartestellung schwenkbar ist. Da nunmehr die Quertraverse zur Aufnahme der Rotorgehäuse und der darin drehbar gelagerten Verteilscheiben aus den beiden Einzeltraversen besteht, ist es durch die Aufhängung mittels der äußeren Schwenkbeschläge in Verbindung mit der Schnellkoppeleinrichtung möglich, bei Bedarf die beiden Einzeltraversen, an denen jeweils ein Rotorgehäuse und demzufolge auch eine Verteilerscheibe befestigt ist, in eine solche Position nach außen zu verschwenken, daß sie seitlich nach außen versetzt zu der Siebeinrichtung steht. Dadurch wird die Siebeinrichtung frei zugänglich, d. h., man kann in aufrechter Haltung bis an die Siebeinrichtung in dieser Wartungsstellung herangehen. Da die beiden Einzeltraversen in der zueinander fluchtenden Betriebsstellung durch die Schnellkoppeleinrichtung starr miteinander verbunden sind, kann das Koppeln oder Entkoppeln ohne zur Hilfenahme von Werkzeugen und besonderer Verbindungselemente durchgeführt werden.

Der Schwenkbeschlag wird konstruktiv besonders einfach, wenn dieser im wesentlichen aus einem Führungsrohr und einer quer dazu stehenden Grundplatte besteht, an die eine Lagerhülse angesetzt ist, welche auf einen die Schwenkachse bildenden Lagerbolzen drehbar gelagert ist. In den Führungsrohren sind die einander abgewandten Enden der Einzeltraverse gelagert, so daß die Rotorgehäuse und die Verteilteller der Schwenkbewegung der Führungsrohre folgen. Da die Rotorgehäuse im mittleren Bereich dicht aneinander liegen, ist vorgesehen, daß die einander abgewandten Endbereiche der Einzeltraversen in den Führungsrohren zumindest in axialer Richtung durch formschlüssige Führungselemente geführt sind. Die Rotorgehäuse können dann in entgegengesetzten Richtungen auseinander gefahren werden, so daß sie beim Ausschwenken nicht aneinander schlagen. Dabei ist es vorteilhaft, wenn die einander abgewandten Endbereiche der Einzeltraversen vorzugsweise in den auseinandergefahrenen Endstellungen innerhalb der formschlüssigen Führungselemente gegenüber dem Führungsrohr derart verdrehbar sind, daß die Rotorgehäuse von ihrer gegen die horizontalen geneigten Stellung in eine Horizontalstellung überführbar sind. Durch die zusätzliche Verdrehbarkeit wird erreicht, daß die Einzeltraversen in der ausgeschwenkten Wartungsstellung senkrecht stehen. Wenn die formschlüssigen Führungselemente so gestaltet sind, daß die Verdrehung nur nach dem Auseinanderfahren erfolgt, wird eine funktionssichere Ausführung geschaffen. Eine einfache, jedoch dem robusten Mähdreschereinsatz angepaßte Ausführung wird erreicht, in dem die formschlüssigen Führungselemente aus in den äußeren Führungsrohren vorgesehene Winkelnuten oder winkelförmige Spitze und in den Endbereichen der Einzeltraversen festgesetzte in die Winkelnuten oder in winkelförmigen Schlitze eingreifende Führungszapfen gebildet sind. Es sei noch erwähnt, daß die Rotorgehäuse fest mit den Einzeltraversen verbunden sind, daß sie und auch die Verteilerteller der Bewegung der Einzeltraversen folgen, was in der Beschreibung und den Ansprüchen der Einfachheit halber nicht ausführlich erwähnt wird. Weitere vorteilhafte Ausgestaltungen der vorliegenden Erfindung sind in den weiteren Unteransprüchen näher definiert.

Im folgenden soll die Erfindung anhand eines Ausführungsbeispiels und mehrerer dieses schematisch darstellender Figuren näher erläutert werden. Dabei zeigt:
- Figur 1: das rückwärtige Ende eines Mähdreschers in der Seitenansicht,
- Figur 2: einen vergrößerten Auszug aus Figur 1 in Richtung der Pfeile II der Figur 3 gesehen,
- Figur 3: eine Seitenansicht in Pfeilrichtung III der Figur 2 gesehen,
- Figur 4: eine der Figur 3 entsprechende Darstellung bei der sich das linke Rotorgehäuse in einer ausgefahrenen horizontalen Zwischenstellung und das rechte Rotorgehäuse in der vertikalen Wartungsstellung befindet.

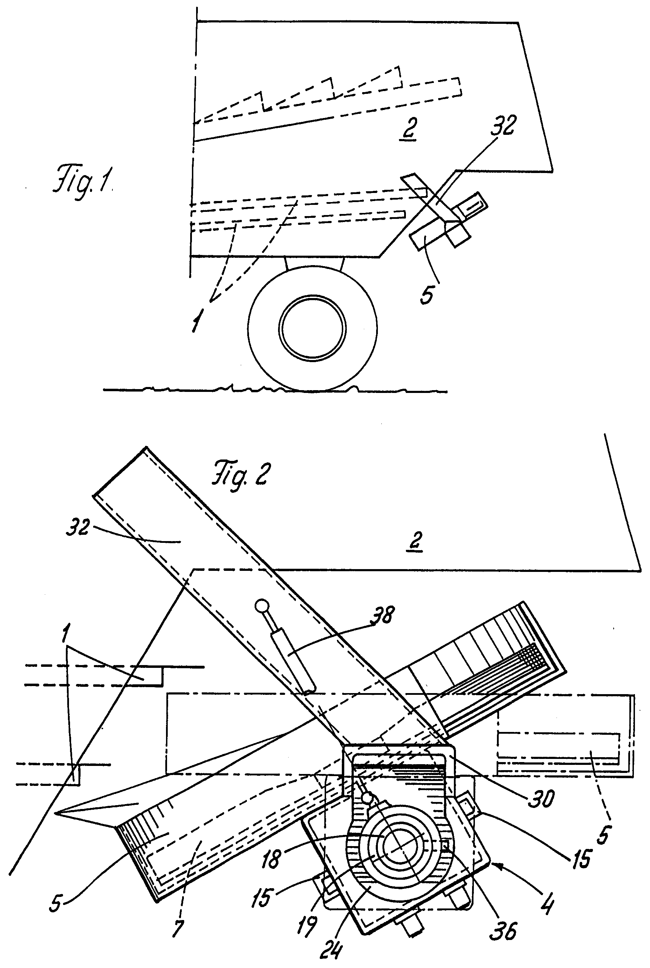

In den Figuren 1 bis 3 sind die Siebböden 1 einer Siebeinrichtung eines im ganzen nicht dargestellten Mähdreschers andeutungsweise dargestellt, die zwischen den beiden Mähdrescherseitenwänden 2 und 3 liegen. Auf einer hinter den Siebböden 1 liegenden, horizontalen Quertraverse 4 sind zwei nebeneinander liegende Rotorgehäuse 5, 6 fest montiert, in denen nicht näher erläuterte Verteilerscheiben 7 und 8 drehbar gelagert sind. Aus den Rotorgehäusen 5 und 6 und den Verteilerscheiben 7 und 8 wird eine Einrichtung zur Verteilung des Korn-Spreu-Gemisches gebildet. Die Verteilscheiben 7 und 8 werden durch Einzelantriebe in Form von Hydromotoren 9 und 10 in entgegengesetzten Drehrichtungen angetrieben, damit das Korn-Spreu-Gemisch durch äußere Auswurföffnungen 11 und 12 auf dem Feld verteilt werden kann.

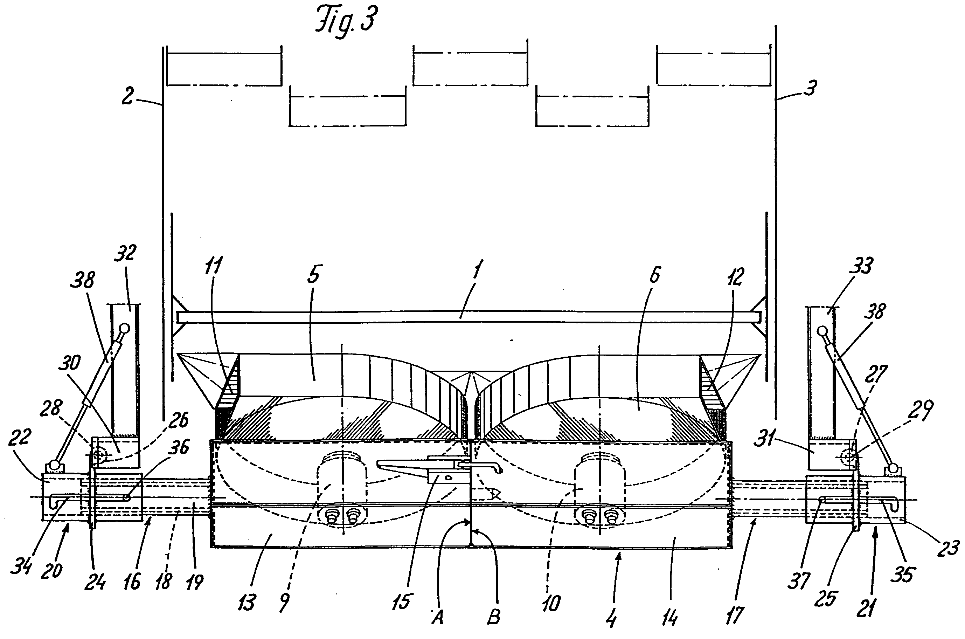

Die Quertraverse 4 besteht aus Zwei Einzeltraversen 13 und 14, die durch Handriegel 15 in der in der Figur 3 dargestellten Betriebsstellung miteinander verbunden sind. Die einander zugewandten Stoßflächen (A, B) der Einzeltraversen 13, 14 liegen in der Betriebsstellung aneinander und zentrieren sich gegenseitig durch einen Bolzen C und einer Eintauchbohrung D. Die einander abgewandten Endbereiche 16 und 17 der Einzeltraversen 13 und 14 bestehen aus jeweils einem Innenrohr 18 und einem eine Gleitbeschichtung bildenden äußeren Gleitbuchse 19, die fest miteinander verbunden sind. Die Endbereiche 16 und 17 stehen gegenüber den Rotorgehäusen 5 und 6 nach außen vor. Die Innenrohre 18 und die Gleitbuchsen 19 haben kreisförmige Querschnitte. Die in Betriebsstellung einander zugewandten Bereiche der Einzeltraversen 13 und 14, die als Träger für die Rotorgehäuse 5 und 6 dienen, sind aus Quadratrohren gefertigt, deren Seitenkanten größer sind als die Durchmesser der Endbereiche 16 und 17 der Einzeltraversen 13 und 14, wodurch ausreichend große Montageflächen entstehen.

Die Endbereiche der Einzeltraversen 13 und 14 sind in Schwenkbeschlägen 20 und 21 gelagert. Diese Schwenkbeschläge bestehen aus äußeren Führungsrohren 22 und 23, so wie quer dazu stehende umgreifende Scharnierplatten 24 und 25. An den oberen Seiten sind an den Scharnierplatten 24 und 25 Lagerhülsen 26 und 27 angeformt, die auf Lagerbolzen 28 und 29 drehbar gelagert sind. Die Lagerbolzen 28 und 29 sind in U-förmigen, ortsfesten Haltern 30 und 31 fest eingesetzt. Die Halter 30 und 31 sind an Tragarmen 32 und 33 angeschweißt, die an den Mähdrescherseitenwänden 2, 3 befestigt sind. In den Endbereichen der beiden Führungsrohre 22, 23 sind Dämpfungselementen in Form von Öldruckfedern 38 angelenkt, die sich mit dem anderen Ende an den Tragarmen 32 und 33 abstützen. Die Endbereiche 16 und 17 der Einzeltraversen 13 und 14 sind durch formflüssige Führungselemente sowohl axial verschieblich als auch drehbar in den Führungsrohren 22, 23 geführt. Die Führungselemente bestehen aus winkelförmigen Nuten 34, 35 oder winkelförmigen Schlitzen, die in den Führungsrohren 22, 23 eingearbeitet sind und darin eingreifende Führungszapfen 36, 37, die auf die Innenrohre 18 der Einzeltraversen 13 und 14 fest aufgesetzt sind.

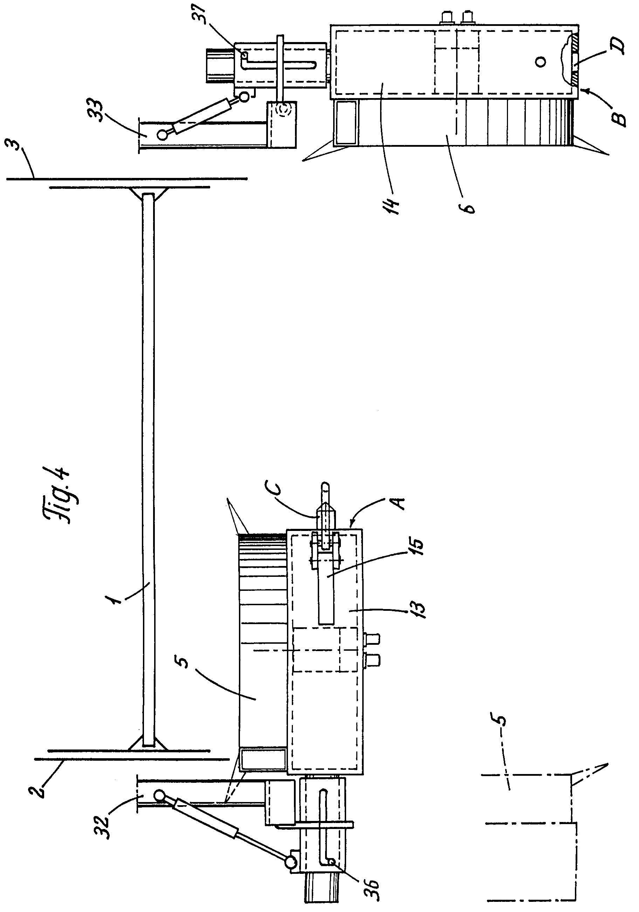

Sollen die beiden Einzeltraversen 13 und 14 und die Rotorgehäuse 5 und 6 von in den Figuren 1, 2, 3 dargestellten Betriebsstellung in eine in der Figur 4 in der rechten Seite dargestellte Wartungsposition gebracht werden, wird zunächst der Handriegel 15 der Schnellkoppeleinrichtung entriegelt, so daß sich die beiden Einzeltraversen 13 und 14 quer zur Fahrtrichtung, in entgegengesetzten Richtungen, geführt durch die Führungszapfen 36 und 37 und die Winkelnuten 34 und 35 nach außen verschieben lassen. Wenn die Führungszapfen in den radialen, äußeren Bereich der Winkelnuten 34, 35 gelangen, können die Einzeltraversen 14, 15 mit den Rotorgehäusen 5 und 6 in eine waagerechte Position gedreht werden. Diese Stellung ist in der linken Seite der Figur 4 und außerdem in der Figur 2 in strichpunktierten Linien angedeutet. Aus der Figur 4 ergibt sich auch, daß anschließend beide Einzeltraversen um die Lagerbolzen 28 und 29 geschwenkt in eine vertikale äußere Stellung gebracht werden können, wie in der rechten Seite der Figur 3 dargestellt. Da die Schwenkachsen bildenden Lagerbolzen 28 und 29 gegenüber den Mähdrescherseitenwänden 2 und 3 nach außen versetzt sind, stehen auch die Rotorgehäuse 5 und 6 nach außen versetzt, so daß der Siebboden 1 und demzufolge die gesamte Siebeinrichtung über die gesamte Breite voll zugänglich ist, ohne daß Bauteile noch gegenüber dem hinteren Ende nach hinten vorstehen. Die Rückstellung in die in der Figuren 1 und 2 dargestellte Betriebsstellung erfolgt in umgekehrter Reihenfolge.

## Patentansprüche

1. Mähdrescher mit einer Siebeinrichtung und mit einer Einrichtung zum Verteilen des Korn-Spreu-Geschmisches über die gesamte Schnittbreite des Mähdreschers, die im wesentlichen aus zwei in festen Rotorgehäusen (5, 6) angeordneten, rotierend antreibbaren Verteilscheiben (7, 8) besteht, wobei die Rotorgehäuse (5, 6) und die Verteilscheiben (7, 8) auf einer Quertraverse (4) fest gelagert sind,
**dadurch gekennzeichnet**,
daß die Quertraverse (4) aus zwei im Stoßbereich durch eine Koppeleinrichtung (15) miteinander verbindbare Einzeltraversen (13, 14) gebildet ist, und daß jede Einzeltraverse (13, 14) mittels eines Schwenkbeschlages (20, 21) an eine außenseitige, dem Stoßbereich der Einzeltraversen (13, 14) abgewandte Achse (28, 29) schwenkbar derart aufgehängt ist, daß jede Einzeltraverse (13, 14) in eine horizontale Betriebsstellung und in ein vertikale oder annähernd vertikale Wartungsstellung schwenkbar ist.

2. Mähdrescher nach Anspruch 1,
**dadurch gekennzeichnet**,
daß jeder Schwenkbeschlag (20, 21) im wesentlichen aus einem Führungsrohr (22, 23) und einer quer dazu angeordneten Grundplatte (24, 25) besteht, an die eine Lagerhülse (26, 27) angesetzt ist, welche auf einem die Schwenkachse bildenden Lagerbolzen (28, 29) drehbar gelagert ist.

3. Mähdrescher nach Anspruch 2,
**dadurch gekennzeichnet**,
daß die einander angewandten Endbereiche der Einzeltraversen (13, 14) in den Führungsrohren (22, 23) des Schwenkbeschlages (20, 21) zumindest in axialer Richtung durch formschlüssige Führungselemente geführt sind.

4. Mähdrescher nach Anspruch 3,
**dadurch gekennzeichnet**,
daß die einander abgewandten Endbereich der Einzeltraversen (13, 14) vorzugsweise in den auseinandergefahrenen Endstellungen innerhalb der formschlüssigen Führungselemente gegenüber dem Führungsrohr (22, 23) derart verdrehbar sind, daß die Rotorgehäuse (5, 6) von der gegen die horizontal geneigte Stellung in eine horizontale Stellung überführbar sind.

5. Mähdrescher nach Anspruch 3 und 4,
**dadurch gekennzeichnet**,
daß die formschlüssigen Führungselemente aus in den äußeren Führungsrohren (22, 23) vorgesehene Winkelnuten (34, 35) oder winkelförmige Schlitze und in den Endbereichen der Einzeltraversen (13, 14) festgesetzte, in die Winkelnuten (34, 35) oder in die winkelförmigen Schlitze eingreifende Führungszapfen (36, 37) gebildet sind.

6. Mähdrescher nach einem oder mehreren der vorhergehenden Ansprüche 1 bis 5,
**dadurch gekennzeichnet**,
daß die einander abgewandten Endbereiche der beiden Einzeltraversen (13, 14) als Rohrstücke mit kreisringförmigem Querschnitt ausgebildet sind und gegenüber den Rotorgehäusen (5, 6) in der Betriebsstellung nach außen vorstehen und daß die einander zugewandten Bereiche der Einzeltraversen (13, 14) aus Vierkantrohren mit gegenüber dem Außendurchmesser der Endbereiche größerer Seitenlänge bestehen.

7. Mähdrescher nach Anspruch 6,
**dadurch gekennzeichnet**,
daß die einander abgewandten Endbereiche der Einzeltraversen (13, 14) mit einer äußeren Gleitbeschichtung, vorzugsweise in Form einer drehfest mit einem Innenrohr (18) verbundenen Gleitbuchse (19) versehen sind.

8. Mähdrescher nach einem oder mehreren der vorhergehenden Ansprüche,
**dadurch gekennzeichnet**,
daß an jedem Führungsrohr (22, 23) des Schwenkbeschlages (20, 12) ein die Schwenkbewegung der Einzeltraversen (13, 14) bremsendes Dämpfungselement, vorzugsweise in Form einer Öldruckfeder (38) angelenkt ist.

9. Mähdrescher nach einem oder mehreren der vorhergehenden Ansprüche,
**dadurch gekennzeichnet**,
daß jede Verteilerscheibe (7, 8) über einen Einzelantrieb, vorzugsweise in Form eines Hydromotors (9, 10) antreibbar ist.

## Claims

1. A combine harvester having a sieve device and a device for distributing the grain-chaff mixture over the entire cutting width of the combine harvester, which device substantially comprises two rotatingly drivable distributor discs (7, 8) arranged in fixed rotor housings (5, 6), wherein the rotor housings (5, 6) and the distributor discs (7, 8) are fixedly mounted on a transverse structure (4), characterised in that the transverse structure (4) is formed from two individual transverse members (13, 14) which can be connected together in the junction region by a coupling device (15), and that each individual transverse member (13, 14) is pivotably suspended by means of a pivot fitting (20, 21) to an axis (28, 29) which is at the outside and which is remote from the junction region of the individual transverse members (13, 14), in such a way that each individual transverse member (13, 14) is pivotable into a horizontal operative position and into a vertical or approximately vertical maintenance position.

2. A combine harvester according to claim 1 characterised in that each pivot fitting (20, 21) substantially comprises a guide tube (22, 23) and a base plate (24, 25) which is arranged transversely relatively thereto and to which is fitted a mounting sleeve (26, 27) which is rotatably mounted on a mounting pin (28, 29) forming the pivot axis.

3. A combine harvester according to claim 2 characterised in that the mutually facing end regions of the individual transverse members (13, 14) are guided in the guide tubes (22, 23) of the pivot fitting (20, 21) at least in the axial direction by positively locking guide elements.

4. A combine harvester according to claim 3 characterised in that the mutually remote end regions of the individual transverse members (13, 14), preferably in the limit positions of being moved away from each other, are rotatable within the positively locking guide elements with respect to the guide tube (22, 23) in such a way that the rotor housings (5, 6) can be moved from the position of being inclined relative to the horizontal into a horizontal position.

5. A combine harvester according to claim 3 and claim 4 characterised in that the positively locking guide elements are formed from angular slots or angle grooves (34, 35) in the outer guide tubes (22, 23), and guide projections (36, 37) which are fixed in the end regions of the individual transverse memoers (13, 14) and which engage into the angle grooves (34, 35) or into the angular slots.

6. A combine harvester according to one or more of preceding claims 1 to 5 characterised in that the mutually remote end regions of the two individual transverse members (13, 14) are in the form of tube portions of annular cross-section and project outwardly relative to the rotor housings (5, 6) in the operative position and that the mutually facing regions of the individual transverse members (13, 14) comprise quadrangular tubes with a side length which is greater than the outside diameter of the end regions.

7. A combine harvester according to claim 6 characterised in that the mutually remote end regions of the individual transverse members (13, 14) are provided with an outer sliding covering, preferably in the form of a sliding bush (19) non-rotatably connected to an inner tube (18).

8. A combine harvester according to one or are of the preceding claims characterised in that a damping element for braking the pivotal movement of the individual transverse members (13, 14), preferably in the form of an oil-pressure spring (38), is pivotally connected to each guide tube (22, 23) of the pivot fitting (20, 21).

9. A combine harvester according to one or are of the preceding claims characterised in that each distributor disc (7, 8) is drivable by way of an individual drive, preferably in the form of a hydraulic motor (9, 10).

## Revendications

1. Moissonneuse-batteuse comprenant un dispositif de tamisage et un dispositif pour épandre le mélange grainballe sur toute la largeur de coupe de la moissonneuse-batteuse, ce dispositif comprenant essentiellement deux disques épandeurs (7, 8) susceptibles d'être entraînés en rotation et montés dans des carters de rotor (5, 6) fixes, les carters de rotor (5, 6) et les disques épandeurs (7, 8) étant disposés sur une traverse (4),
caractérisée par le fait
que la traverse (4) est formée de deux traverses partielles ou élémentaires (13, 14) pouvant être reliées entre elles dans leur zone d'aboutement par un dispositif d'accouplement (15), et que chaque traverse élémentaire (13, 14) est suspendue à l'aide d'une ferrure de pivotement (20, 21) de façon pivotante sur un axe (28, 29) situé côté extérieur, à l'opposé de la zone d'aboutement des traverses élémentaires (13, 14), de telle manière que chaque traverse élémentaire (13, 14) puisse être amenée par pivotement d'une position de fonctionnement horizontale à une position d'entretien verticale ou sensiblement verticale.

2. Moissonneuse-batteuse suivant la revendication 1,
caractérisée par le fait
que chaque ferrure de pivotement (20, 21) se compose essentiellement d'un tube de guidage (22, 23) et d'une plaque de base (24, 25) disposée transversalement à ce tube et sur laquelle est rapportée une douille-palier (26, 27) montée en rotation sur une tige (28, 29) formant l'axe de pivotement.

3. Moissonneuse-batteuse suivant la revendication 2,
caractérisée par le fait
que les zones d'extrémité des traverses élémentaires (13, 14), éloignées l'une de l'autre, sont guidées dans les tubes de guidage (22, 23) de la ferrure de pivotement (20, 21) tout au moins en direction axiale par des éléments de guidage à complémentarité de forme.

4. Moissonneuse-batteuse suivant la revendication 3,
caractérisée par le fait
que les zones d'extrémité des traverse élémentaires (13, 14), éloignées l'une de l'autre, sont mobiles en rotation, de préférence dans les positions extrêmes dégagées, à l'intérieur des éléments de guidage à complémentarité de forme, par rapport aux tubes de guidage (22, 23) de telle manière que les carters de rotor (5, 6) puissent être amenés de la position inclinée par rapport à l'horizontale dans une position horizontale.

5. Moissonneuse-batteuse suivant revendication 3 et 4,
caractérisée par le fait
que les éléments de guidage à complémentarité de forme sont constitués par des rainures coudées (34, 35) ou des fentes coudées prévues dans les tubes de guidage extérieurs (22, 23) et par des doigts de guidage (36, 37) fixés dans les zones d'extrémité des traverses élémentaires (13, 14) et pénétrant dans les rainures coudées (34, 35) ou fentes coudées.

6. Moissonneuse-batteuse suivant une ou plusieurs des revendications précédentes 1 à 5,
caractérisée par le fait
que les zones d'extrémité des deux traverses élémentaires (13, 14,) éloignées l'une de l'autre, sont réalisées sous forme de tronçons de tubes de section en couronne circulaire et font saillie vers l'extérieur par rapport aux carters de rotor (5, 6) dans la position de fonctionnement et que les zones d'extrémité des traverses élémentaires (13, 14), tournées l'une vers l'autre, sont constituées par des tubes carrés dont les côtés sont plus grands que le diamètre extérieur des zones d'extrémité.

7. Moissonneuse-batteuse suivant la revendication 6,
caractérisée par le fait
que les zones d'extrémité des traverses élémentaires (13, 14), éloignées l'une de l'autre, sont munies d'un revêtement extérieur de glissement, de préférence sous la forme d'un coussinet (19) solidaire en rotation d'un tube intérieur (18).

8. Moissonneuse-batteuse suivant une ou plusieurs des revendications précédentes,
caractérisée par le fait
que sur chaque tube de guidage (22, 23) de la ferrure de pivotement (20, 12) est articulé un élément amortisseur freinant le mouvement de pivotement des traverses élémentaires (13, 14), de préférence sous la forme d'un ressort à pression d'huile (38).

9. Moissonneuse-batteuse suivant une ou plusieurs des revendications précédentes,
caractérisée par le fait
que chaque disque épandeur (7, 8) peut être entraîné par un système d'entraînement individuel, de préférence sous la forme d'un moteur hydraulique (9, 10).
